# EUROPEAN PATENT APPLICATION

(11) **EP 1 615 279 A2**
(43) Date of publication of application: **11.01.2006**
(21) Application number: 05254214.9
(22) Date of filing: 05.07.2005
(51) Int. Cl.: H01M 4/92, H01M 4/86

(54) **Supported catalyst and fuel cell using the same**

(30) Priority: 08.07.2004 KR 2004052970
(71) Applicant: Samsung SDI Co., Ltd., Suwon-si, Gyeonggi-do (KR)
(72) Inventor: Kim, Hae-kyoung, Seoul (KR); Pak, Chan-ho, Seocho-gu Seoul (KR); Chang, Hyuk, Seongnam-si, Gyeonggi-do (KR); Suh, Sang-hyuk, Seoul (KR); Yoo, Dae-jong, Samsung Advanced Inst. of Techn., Yongin-si Gyeonggi-do (KR)
(74) Representative: Kyle, Diana

(57) **Abstract**

A supported catalyst, an electrode including the same, and a fuel cell using the electrode are provided. The supported catalyst includes a carbon-based catalyst support, catalytic metal particles adsorbed on a surface of the carbon-based catalyst support, and an ionomer chemically or physically absorbed to the surface of the carbon-based catalyst support and having a functional group capable of providing proton conductivity on an end. In the supported catalyst, the catalyst support performs an essential function of transporting protons in the formation of an electrode, thereby increasing the efficiency. When using an electrode prepared using the supported catalyst, a fuel cell having improved performances, such as energy density and efficiency of fuel, can be prepared.

## Description

The present invention relates to a supported catalyst and a fuel cell using the same, and more particularly, to a supported catalyst having proton conductivity, a method of preparing the same, and a fuel cell using an electrode prepared using the supported catalyst.

A fuel cell, which is a future source of clean energy with the potential to replace fossil fuels, has high power density and high energy-conversion efficiency. Also, the fuel cell can operate at an ambient temperature and can be made miniaturized and hermetically sealed. Thus, it can be extensively applied to the fields of zero-emission vehicles, power generating systems, mobile telecommunications equipment, medical equipment, military equipment, space equipment, and portable electronic devices.

Proton exchange membrane fuel cells (PEMFCs) or direct methanol fuel cells (DMFCs) are power generating systems which produce electricity through the electrochemical reaction of methanol, water, and oxygen, and includes an anode and a cathode where liquid and gas are supplied and a proton conductive membrane which is interposed between the anode and the cathode. A catalyst contained in the anode and the cathode decomposes hydrogen or methanol to form protons, which pass through the proton conductive membrane and then react with oxygen in the cathode with the aid of the catalyst so as to generate electricity.

As described above, a catalyst is contained in the cathode and/or anode of the fuel cell to promote the electrochemical oxidation of fuel and/or the electrochemical reduction of oxygen.

In the PEMFC, each of the anode and the cathode contains a catalyst with platinum particles dispersed in an amorphous carbon support. In the DMFC, the anode contains PtRu and the cathode contains platinum particles or a catalyst with platinum particles dispersed in an amorphous carbon support.

To ensure the cost competitiveness of a cell in the DMFC, the reduction in the amount of the catalyst used is required. According to this requirement, an effort to reduce the amount of the catalyst used in the anode and the cathode by using a carbon support capable of more increasing catalytic activity or a degree of dispersion than the amorphous carbon support has been continuously made.

The present invention provides a supported catalyst, which is modified to easily transport protons, thus has electroconductivity and proton conductivity, a method of preparing the supported catalyst, an electrode using the supported catalyst, and a fuel cell having improved energy density, efficiency of fuel, etc., by including the electrode.

According to an aspect of the present invention, there is provided a supported catalyst including a carbon-based catalyst support, catalytic metal particles adsorbed on a surface of the carbon-based catalyst support, and an ionomer chemically bound or physically absorbed to the surface of the carbon-based catalyst support and having a functional group capable of providing proton conductivity on an end.

The functional group capable of providing proton conductivity may be a sulfonic acid group (-SO₃H), a carboxylic acid group (COOH), or a phosphoric acid group.

The ionomer chemically bound or physically absorbed to the surface of the carbon-based catalyst support and having a functional group capable of providing proton conductivity on an end may be obtained through a chemical reaction between a hydroxy group (-OH) on the surface of the carbon-based catalyst support and a polymerizable monomer, and then a chemical reaction for providing the resultant with proton conductivity.

The carbon-based catalyst support may be at least one selected from the group consisting of carbon black, Ketzen black, acetylene black, activated carbon powder, carbon molecular sieve, carbon naotube, activated carbon having micropores, and mesoporous carbon.

According to another aspect of the present invention, there is provided a method of preparing the supported catalyst, the method including: mixing a carbon-based catalyst support, a polymerizable monomer, a polymerization initiator, and a solvent and reacting the mixture to fix an ionomer to a surface of the carbon-based catalyst support through a chemical bond; reacting the resultant to introduce a functional group capable of providing proton conductivity onto an end of the ionomer; and impregnating catalytic metal particles into the resulting catalyst support.

According to another aspect of the present invention, there is provided an electrode including the supported catalyst.

According to another aspect of the present invention, there is provided a fuel cell having the electrode including the supported catalyst.

The fuel cell may be a direct methanol fuel cell.

The above and other features and advantages of the present invention will become more apparent by describing in detail exemplary embodiments thereof with reference to the attached drawings in which:
FIG. 1 schematically illustrates the structure of a supported catalyst of the present invention;
FIG. 2 schematically illustrates the structure of a general supported catalyst;
FIG. 3 illustrates the structure of a fuel cell according to an embodiment of the present invention;
FIG. 4 is an x-ray photoelectron spectroscopy (XPS) spectrum of a supported catalyst of Example 1 of the present invention, which illustrates variation in a components before and after sulfonating by adding H₂SO₄;
FIG. 5 is analysis result using a differential scanning calorimeter (DSC) and thermogravimetric analysis (TGA) result for the supported catalyst prepared according to Example 1 of the present invention; and
FIG. 6 illustrates variation of cell potential with respect to current density of a fuel cell prepared according to Example 2 of the present invention.

Hereinafter, the present invention will be described in more detail.

When using a catalyst impregnated into a general support, ions and electrons are produced through an electrochemical reaction of fuel, but the general supported catalyst cannot transport the produced ions. Thus, an ionomer, such as Nafion, is used together with the supported catalyst in an electrode when forming the electrode so as to easily transport the produced ions, thereby increasing the coefficient of the catalyst utilization. In this case, proper use of the supported catalyst and the ionomer plays an important role in the construction of the electrode and the manufacturing costs of the electrode increase due to the newly added ionomer.

In the present invention, a support is allowed to perform the function as a proton transporting material essential in the formation of an electrode, and thus, the amount of the ionomer separately added is reduced or a support is prepared without using the ionomer. As a result, the electrode can be easily prepared and its manufacturing costs can be reduced.

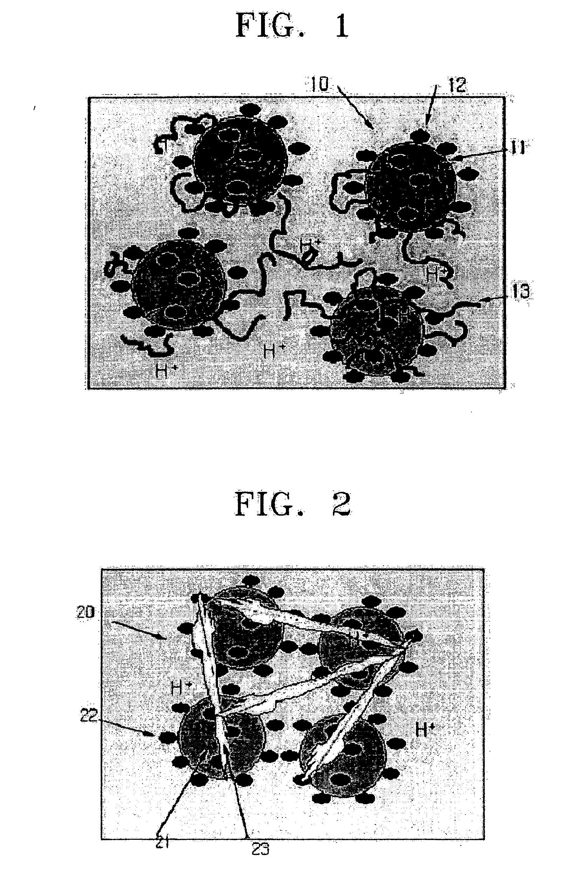

Referring to FIG. 1 schematically illustrating the structure of a supported catalyst of an embodiment of the present invention, a supported catalyst 10 is composed of catalyst support 11, catalytic metal particles 12 adsorbed on the surface of the catalyst support 11, and an ionomer 13 chemically bound (for example, grafted) or physically absorbed to the surface of the catalyst support 11. The ionomer 13 has a functional group, for example, an acidic group, such as a sulfonic acid group (-S03H), capable of providing proton conductivity on an end, so as to transport protons.

Referring to FIG. 2 illustrating the structure of a conventional supported catalyst, a supported catalyst 20 has catalytic metal particles 22 adsorbed on the surface of the catalyst support 21 and an ionomer 23 is located near the catalyst support 21 and the catalytic metal particles 22, but a chemical bond between the ionomer 23 and the catalyst support 21 is not formed unlike in FIG. 1.

As illustrated in FIG. 1, in the present invention, the ionomer is grafted to the catalyst support 11 composing an electrode of a fuel cell so as to act as a path for proton.

Thus, the amount of the ionomer used in the electrode can be reduced, the produced protons can be rapidly transported, and hydrophilicity in a fuel cell can be improved by using intrinsic surface property of the support.

In the present invention, the ionomer is used similar to a polyelectrolyte.

A method of preparing the supported catalyst of the present invention is as follows.

First, a carbon-based catalyst support, a polymerizable monomer, a polymerization initiator, and a solvent are mixed and reacted to graft the ionomer to the surface of the carbon catalyst support. This reaction is occurred by heating or by irradiating light. The temperature is varied depending on types of the monomer and initiator used, and ranges from 50 to 65°C, particularly 55-60°C. If the temperature is below this range, polymerization is not initiated by the polymerization initiator. Thus, grafting is not occurred by polymerization. If the temperature is above this range, the molecular weight of a polymer is excessively low.

The carbon-based catalyst support is not particularly restricted, but is porous and has a surface area of 300 m²/g or more, particularly 300-1200 m²/g and an average particle diameter of 20-200 nm, particularly 30-150 nm. If the surface area is below this range, the impregnating ability of the catalyst particles is insufficient.

Examples of the carbon-based catalyst support satisfying the requirements described above include carbon black, Ketzen black (KB), acetylene black, activated carbon powder, carbon molecular sieve, carbon nanotube, activated carbon having micropores, and mesoporous carbon. Ketzen black (KB) having a surface area of about 406 m²/g is preferably used.

The carbon-based catalyst support may be hydrophilically modified, if necessary.

The polymerizable monomer may be any compound having an unsaturated double bond, which reacts with the -OH group present on the surface of the carbon-based catalyst support. Examples of the polymerizable monomer include, but are not limited to, styrene, acrylic monomer, methacrylic monomer, arylsulfone, benzene compound, and the like. The amount of the polymerizable monomer may be 3,000-20,000 parts by weight, and preferably 6,000-10,000 parts by weight, based on 100 parts by weight of the carbon-based catalyst support. If the amount of the polymerizable monomer is below this range, the proton conductivity is reduced. If the amount of the polymerizable monomer is above this range, the electroconductivity is reduced.

The polymerization initiator initiates the polymerization of the polymerizable monomer and examples thereof include, but are not limited to, persulfate, AIBN, benzoyl peroxide, lauryl peroxide, and the like. The amount of the polymerization initiator may be 0.1-5 part by weight, particularly 0.3-0.5 part by weight, based on 100 parts by weight of the polymerizable monomer. If the amount of the polymerization initiator is below this range, the molecular weight of a polymer obtained may be excessively increased due to a small amount of initiator. If the amount of the polymerization initiator is above this range, the molecular weight of a polymer obtained is too low.

The resulting product is filtered, dried, and worked up. Then, a chemical reaction for introducing a functional group providing proton conductivity into an end of the ionomer obtained according to the above procedures is undergone. An example of such chemical reaction includes sulfonation using sulfuric acid, etc.

The ionomer formed according to the above procedures has a weight average molecular weight of 500-10,000, and an example thereof includes a compound having the following formula: 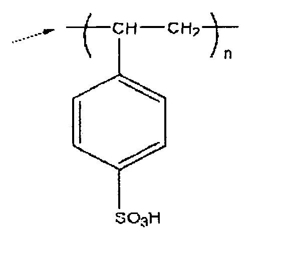
where the row represents a position to be connected to the surface of the carbon support; and
n is an integer from 2 to 50.

The amount of the ionomer is 1-50 parts by weight, and preferably 2-10 parts by weight, based on 100 parts by weight of the carbon-based catalyst support.

Then, catalytic metal particles are impregnated into the resulting catalyst support to complete the supported catalyst of the present invention. The impregnating process of the catalytic metal particles is not particularly restricted, and gas phase impregnation using a reducing agent is used in the present invention and will now be described.

The obtained catalyst support is mixed with a solution containing a catalytic metal precursor, and then a reducing agent or a solution containing a reducing agent is added thereto so as to allow the catalytic metal particles to adsorb to the catalyst support.

The solution containing the catalytic metal precursor is composed of a catalytic metal precursor and a solvent. Examples of the solvent include water, alcohols, such as methanol, ethanol, propanol, acetone, and a mixture thereof. The amount of the catalytic metal precursor is 30-150 parts by weight based on 100 parts by weight of the solvent.

Examples of a Pt precursor among the catalytic metal precursors include tetrachloroplatinate (H₂PtCl₄), hexachloroplatinate (H₂PtCl₆), potassium tetrachloroplatinate (K₂PtCl₄), potassium hexachloroplatinate (H₂PtCl₆), or a mixture thereof. Examples of a Ru precursor include (NH₄)₂[RuCl₆], (NH₄)₂[RuCl₅H₂O], and the like, and examples of a Au precursor include H₂[AuCl₄], (NH₄)₂[AuCl₄], H[Au(NO₃)_{4]}H₂O, and the like.

In the case of an alloy catalyst, a mixture of precursors having a mixing ratio corresponding to the desired atomic ratio of metals is used.

The reducing agent reduces a catalytic metal precursor into a corresponding catalytic metal and examples thereof include hydrogen gas, hydrazine, formaldehyde, formic acid, polyol, and the like. Examples of the polyol include ethylene glycol, glycerol, diethylene glycol, triethylene glycol, and the like.

When adding the solution containing a reducing agent, a solvent mixed with the reducing agent is identical to that used in the preparation of the solution containing the catalytic metal precursor.

In the supported catalyst obtained according to the above procedures, the amount of the ionomer grafted to the catalyst support may be identified through thermogravimetric analysis (TGA). The amount of the ionomer grafted to the catalyst support, determined through TGA is 2-10 parts by weight, based on 100 parts by weight of the catalyst support.

When the total surface area of the carbon-based catalyst support is represented by 100, the ratio of the ionomer in the surface area of the carbon-based catalyst support is not particularly restricted, but may be about **2~10** according to an embodiment of the present invention.

A metal adsorbed to the catalyst support is at least one selected from the group consisting of platinum (Pt), ruthenium (Ru), palladium (Pd), rhodium (Rh), iridium (Ir), osmium (Os) and gold (Au), and the average particle diameter of the catalytic metal particle is 2-7 nm. The amount of the catalytic metal particle is 5-80 parts by weight based on 100 parts by weight of the carbon-based catalyst support.

The supported catalyst prepared according to the above procedures may be applied to an electrode catalyst layer of a fuel cell. The fuel cell may be a direct methanol fuel cell (DMFC).

Also, the supported catalyst of the present invention is used as a catalyst for hydrogenation, dehydrogenation, coupling, oxidation, isomerization, decarboxylation, hydrocracking, alkylation, and the like.

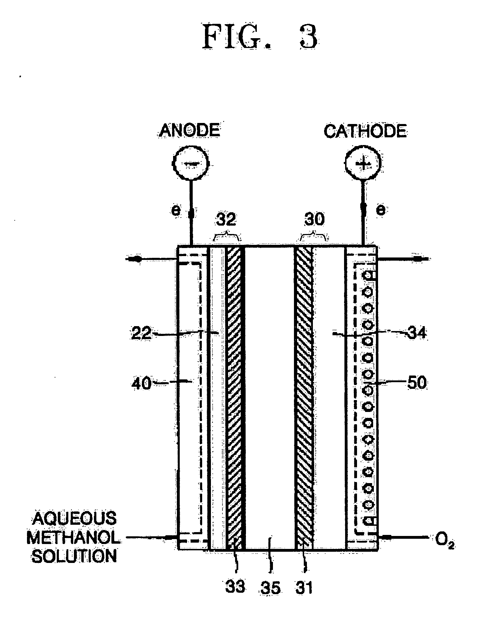

A DMFC among fuel cells according to an embodiment of the present invention using the supported catalyst will now be described with reference to FIG. 3.

The DMFC of the present invention has the structure illustrated in FIG. 3. The DMFC includes an anode 32 where fuel is supplied, a cathode 30 where an oxidant is supplied, and an electrolyte membrane 40 interposed between the anode 32 and the cathode 30. Generally, the anode 32 is composed of an anode diffusion layer 22 and an anode catalyst layer 33 and the cathode 30 is composed of a cathode diffusion layer 34 and a cathode catalyst layer 31. In the present invention, the anode catalyst layer 33 and the cathode catalyst layer 31 are composed of the supported catalyst as described above.

A bipolar plate 40 has a path for supplying fuel to the anode 32 and acts as a electron conductor for transporting electrons produced in the anode to an external circuit or an adjacent unit cell. A bipolar plate 50 has a path for supplying an oxidant to the cathode 30 and acts as an electron conductor for transporting electrons supplied from the external circuit or the adjacent unit cell to the cathode 30. In the DMFC, an aqueous methanol solution is mainly used as the fuel supplied to the anode 32 and air is mainly used as the oxidant supplied to the cathode 30.

The aqueous methanol solution transported to the anode catalyst layer 33 through the anode diffusion layer 22 is decomposed into electrons, protons, carbon dioxide, and the like. The protons are transported to the cathode catalyst layer 31 through the electrolyte membrane 35, the electrons are transported to an external circuit, and the carbon dioxide is discharged to the outside. In the cathode catalyst layer 31, the protons transported through the electrolyte membrane 35, the electrons supplied from an external circuit, and the oxygen in the air transported through the cathode diffusion layer 32 react to produce water.

In such DMFC, the electrolyte membrane 40 acts as a proton conductor, an electron insulator, a separator, and the like. The separator prevents unreacted fuel from being transported to the cathode or unreacted oxidant from being transported to the anode.

In the DMFC, the electrolyte membrane is composed of a cation exchanging polymer electrolyte, such as highly fluorinated polymer (for example, Nafion available from Dupont), which is sulfonated, having fluorinated alkylene forming a main chain and a side chain of fluorinated vinyl ether having a sulfonic acid group on an end.

The present invention will be described in greater detail with reference to the following examples. The following examples are for illustrative purposes and are not intended to limit the scope of the invention.

### Example 1

60 g of styrene and 0.18 g of azobisisobutyronitrile as a polymerization initiator were mixed, and then 1 g of Ketzen black (KB) was added to the mixture. The resultant was heated to about 65°C for 8 hours.

The reaction mixture was then filtered and dried. Next, 10M H₂SO₄ was added thereto and the solution was stirred for 240 minutes. Thereafter, a catalyst particle solution of 0.6 g of H₂PtCl₆ in 3 ml of acetone was added, and then the solution was stirred for 1 hour. Then, the resultant was reduced in a furnace under a hydrogen atmosphere at 100°C for 4 hours.

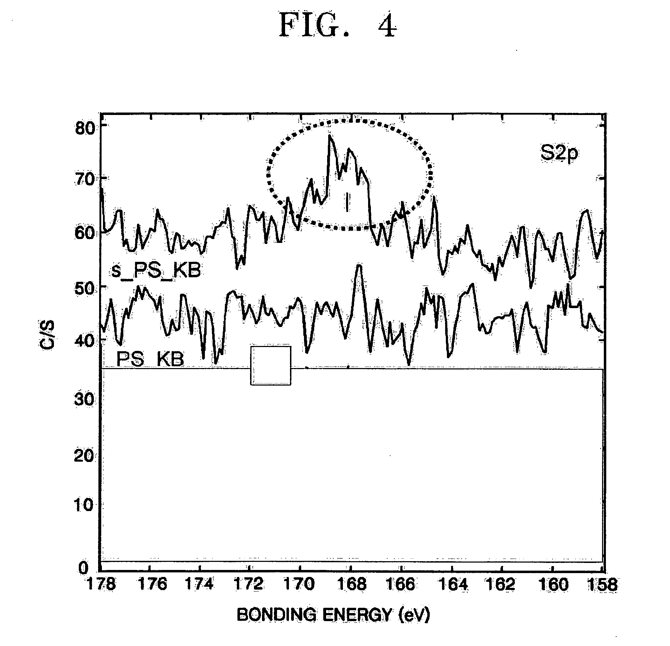

In the supported catalyst obtained according to Example 1, variations in components were investigated before and after sulfonation process by adding H₂SO₄ through XPS and the results are illustrated in FIG. 4. In FIG. 4, s_PS_KB is for a sample after sulfonation process and PS KB is for a sample before sulfonation process As is apparent from FIG. 4, a peak assigned to a sulfonic acid group is detected after sulfonating.

Also, the moisture content_in the catalyst after sulfonation process was measured. Specifically, the dried catalyst, which had been obtained by impregnating the metal particles into the catalyst support in the furnace at 100°C, was stored at room temperature, and then the moisture content in the stored catalyst was measured.

As a result, the water content of KB was about 0.71% and that of the catalyst support prepared according to Example 1 was about 15%. These results are attributed to the effects of the ionomer and an increase in hydrophilicity of the catalyst support during reactions.

Also, in the supported catalyst, the following experiment was performed to identify a state of binding of the catalyst support and styrene.

The catalyst support obtained in Example 1 was added to a solution of THF, and the mixture was stirred and then only a solution was taken therefrom. After removing the solvent, the residue was dissolved 0.8 mL of THF-d8 and its nuclear magnetic resonance (NMR) spectrum was investigated.

As a result, a peak of styrene was not observed, indicating that the polymer formed using styrene was grafted to the surface of KB.

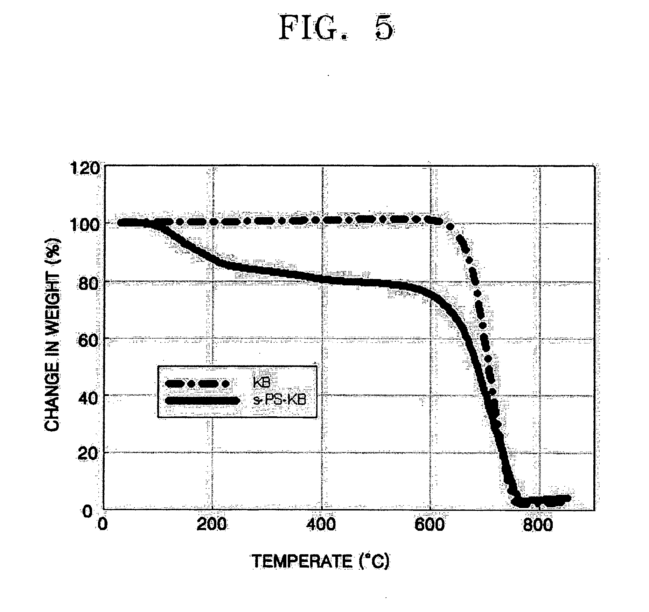

In the supported catalyst obtained according to Example 1, analysis using a differential scanning calorimeter and thermogravimetric analysis were performed and the results are illustrated in FIG. 5. FIG. 5 illustrates the change in weight with respect to the temperature for KB before grafting the polymer and KB after grafting and sulfonating. The change in weight due to decomposition of the polymer is displayed in FIG. 5.

Referring to FIG. 5, by heating the mixture of styrene, the polymerization initiator, and KB at 65°C for 8 hours, the polymer was grafted to KB and the amount of the grafted polymer was identified by a loss in weight in the thermogravimetric analysis.

### Example 2

A fuel cell using a catalyst layer obtained using the supported catalyst of Example 1 was prepared as follows.

In the fuel cell of the present Example, an anode was prepared by spraying a composition for a catalyst layer on a diffusion layer, a cathode was prepared by spraying the catalyst obtained in Example 1 on a diffusion layer, and Nafion 115 membrane was used as an electrolyte membrane. The obtained anode, cathode, and electrolyte membrane were joined under a pressure of 5 Mpa at 120 °C to prepare a membrane and electrode assembly (MEA). The MEA means a structure that a catalyst layer and an electrode are sequentially laminated on both surfaces of a proton conductive polymer membrane.

### Evaluation of performance of the fuel cell

A bipolar plate for supplying fuel and a bipolar plate for supplying an oxidant were both attached to each of the anode and the cathode of the fuel cell prepared according to Example 2, and then, the performance of the fuel cell was determined. The operating conditions were as follows: the flow rate of 8 % by weight of an aqueous methanol solution as fuel of 3 mL/min, the flow rate of air as an oxidant of 50 mL/min, and an operating temperature of 50°C.

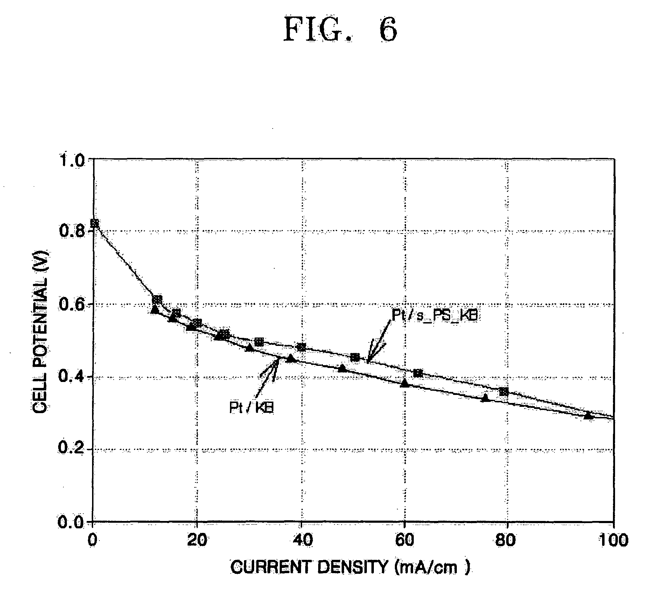

In the fuel cell of Example 2, the change in cell potential with respect to current density was investigated and the results are illustrated in FIG. 6. In FIG. 6, Pt/s_PS_KB is for the fuel cell of Example 2 and Pt/KB is for a fuel cell prepared in the same manner as in Example 1 except that polystyrene and a polymerization initiator were not used in the preparation of a supported catalyst as Comparative Example.

FIG. 6 illustrates examples in which an electrode using the supported catalyst prepared in Example 1 and an electrode using a conventional supported catalyst are applied to a fuel cell. As seen from FIG. 6, the supported catalyst prepared in Example 1 is provided with proton conductivity, and thus has better performance than the conventional supported catalyst.

In the supported catalyst of the present invention, a catalyst support performs an essential function of transporting protons in the formation of an electrode, thereby increasing the efficiency. When using an electrode prepared using the supported catalyst, a fuel cell having improved performances, such as energy density and efficiency of fuel, can be prepared.

## Claims

1. A supported catalyst comprising
a carbon-based catalyst support;
catalytic metal particles adsorbed on a surface of the carbon-based catalyst support; and
an ionomer chemically bound or physically absorbed to the surface of the carbon-based catalyst support and having a functional group capable of providing proton conductivity on an end.

2. The supported catalyst.according to claim 1, wherein the functional group capable of providing proton conductivity is a sulfonic acid group (-SO₃H), a carboxylic acid group (COOH), or a phosphoric acid group.

3. The supported catalyst according to claim 1 or 2, wherein the amount of the ionomer is 1-50 parts by weight based on 100 parts by weight of the carbon-based catalyst support.

4. The supported catalyst according to any of claims 1 to 3, wherein the ionomer chemically bound or physically absorbed to the surface of the carbon-based catalyst support and having a functional group capable of providing proton conductivity on an end is obtained through a chemical reaction between a hydroxy group (-OH) present in the carbon-based catalyst support and a polymerizable monomer, and then a chemical reaction for providing the resultant with proton conductivity.

5. The supported catalyst according to any of claims 1 to 4, wherein the ionomer is derived from at least one selected from styrene, acrylic monomer, methacrylic monomer, arylsulfone, and phenylic compound.

6. The supported catalyst according to any of claims 1 to 5, wherein the ionomer has a weight average molecular weight of 500-10,000.

7. The supported catalyst according to any of claims 1 to 6, which has a surface area of 300 m²/g or greater and an average particle diameter of 20-200 nm.

8. The supported catalyst according to any of claims 1 to 7, wherein the carbon-based catalyst support is at least one selected from carbon black, Ketzen black, acetylene black, activated carbon powder, carbon molecular sieve, carbon nanotube, activated carbon having micropores, and mesoporous carbon.

9. The supported catalyst according to any of claims 1 to 8, wherein the catalytic metal particle is at least one selected from platinum (Pt), ruthenium (Ru), palladium (Pd), rhodium (Rh), iridium (Ir), osmium (Os) and gold (Au).

10. The supported catalyst according to any of claims 1 to 9, wherein the catalytic metal particle has an average particle diameter of 2-7 nm.

11. The supported catalyst according to any of claims 1 to 10, wherein the amount of the catalytic metal particle is 5-80 parts by weight based on 100 parts by weight of the carbon-based catalyst support.

12. A method of preparing a supported catalyst, the method comprising:
mixing a carbon-based catalyst support, a polymerizable monomer, a polymerization initiator, and a solvent and reacting the resulting mixture to fix an ionomer to the carbon-based catalyst support through a chemical bond;
reacting the resultant to introduce a functional group capable of providing proton conductivity into an end of the ionomer; and
impregnating catalytic metal particles into the resulting catalyst support.

13. The method according to claim 12, wherein the polymerizable monomer is at least one selected from styrene, acrylic monomer, methacrylic monomer, arylsulfone, and phenylic compound.

14. The method according to claim 12 or 13, wherein the reaction of the mixture of the carbon-based catalyst support, the polymerizable monomer and the polymerization initiator is undergone by heating to 50-65°C or by irradiating light.

15. The method according to any of claims 12 to 14, wherein in the introduction of a functional group capable of providing proton conductivity into an end of the ionomer is performed through sulfonation using sulfuric acid.

16. The method according to any of claims 12 to 15, wherein the amount of the polymerizable monomer is 3,000-20,000 parts by weight based on 100 parts by weight of the carbon-based catalyst support and the amount of the polymerization initiator is 0.1-5 parts by weight based on 100 parts by weight of the polymerizable monomer.

17. The method of according to any of claims 12 to 16, wherein the polymerization initiator is at least one selected from persulfate, AIBN, benzoyl peroxide, and lauryl peroxide.

18. An electrode comprising a supported catalyst as claimed in any of claims 1 to 11.

19. A fuel cell having an electrode comprising a supported catalyst as claimed in any of claims 1 to 11.

20. The fuel cell according to claim 19, which is a direct methanol fuel cell.
